# EUROPEAN PATENT APPLICATION

(11) **EP 4 043 779 A1**
(43) Date of publication of application: **17.08.2022**
(21) Application number: 20873980.5
(22) Date of filing: 06.10.2020
(51) Int. Cl.: F17C 13/00, F25B 7/00, F25B 41/20, F25B 1/00

(54) **HYDROGEN COOLING DEVICE, HYDROGEN SUPPLY SYSTEM, AND REFRIGERATOR**

(30) Priority: 07.10.2019 JP 2019184580
(71) Applicant: Shinwa Controls Co., Ltd., Kanagawa 215-0033 (JP)
(72) Inventor: UCHIDA Minoru, Kawasaki-shi, Kanagawa 215-0033 (JP); MORIYA Ryo, Kawasaki-shi, Kanagawa 215-0033 (JP); MITSUDUKA Hitoya, Kawasaki-shi, Kanagawa 215-0033 (JP); AOKI Shigeo, Kawasaki-shi, Kanagawa 215-0033 (JP); HIGUMA Toshiki, Kawasaki-shi, Kanagawa 215-0033 (JP)
(74) Representative: Liesegang, Eva
(86) International application number: PCT/JP2020/037836
(87) International publication number: WO 2021/070806

(57) **Abstract**

A hydrogen cooling apparatus according to an embodiment includes: a binary refrigeration unit 1 including a high-temperature-side refrigerator 100 and a low-temperature-side refrigerator 200; and a hydrogen-cooling-fluid circulation unit 2. The binary refrigeration unit 1 cools a hydrogen cooling fluid circulated by the hydrogen-cooling-fluid circulation unit 2 by means of a low-temperature-side evaporator 204 of the low-temperature-side refrigerator 200. The high-temperature-side refrigerator 100 includes: a high-temperature-side refrigeration circuit 105; and a high-temperature-side bypass circuit 110 including: a high-temperature-side bypass flow path 111 that extends from a part, which is downstream of a high-temperature-side compressor and upstream of a high-temperature-side condenser in the high-temperature-side refrigeration circuit 105, to a part, which is downstream of a high-temperature-side expansion valve and upstream of a high-temperature-side evaporator in the high-temperature-side refrigeration circuit 105; and a high-temperature-side opening and closing valve 112 provided on the high-temperature-side bypass flow path 111. The high-temperature-side refrigerator 100 opens the high-temperature-side opening and closing valve 112 when a high-temperature-side refrigerant has an abnormal pressure.

## Description

### Technical Field

The present invention relates to a hydrogen cooling apparatus for cooling hydrogen, a hydrogen supply system for supplying cooled hydrogen, and a refrigerator which may be suitably used for the apparatus or the system.

### Background Art

Fuel cells are attracting attention as a next-generation energy source because of their extremely low environmental pollutants produced during power generation, and is becoming more widespread.

For example, fuel cell vehicles equipped with a fuel cell have been widely used in recent years. Further prevalence of fuel cell vehicles requires that hydrogen supply stations become more common.

A hydrogen supply station generally includes a storage tank for compressing and storing a compressed hydrogen gas, and a supply pipe connected to the storage tank. The hydrogen supply station supplies hydrogen in the storage tank to a fuel cell tank through the supply pipe.

In such a hydrogen supply station, a temperature of the hydrogen passing through the supply pipe may increase by the Joule-Thomson effect, which is required to be suppressed because such increase in temperature increases a temperature of the fuel cell tank. Thus, some hydrogen supply stations are equipped with an apparatus called precooling apparatus which cools a supply pipe. The present applicant has also proposed a hydrogen supply apparatus equipped with such a precooling apparatus in JPB5632065 and JP2017-129259A.

### Disclosure of The Invention

A hydrogen supply system, such as a hydrogen supply station, may be installed in a high temperature environment or a low temperature environment. In order for prevalence of hydrogen supply systems, it is very important to ensure their operational reliability in various environments. A precooling apparatus provided in a hydrogen supply system is generally composed of a refrigerator. Depending on an environmental temperature, a condenser and/or a compressor of the refrigerator may be damaged.

The present invention has been made in view of the above circumstances. An object of the present invention is to provide a hydrogen cooling apparatus, a hydrogen supply system, and a refrigerator which are capable of improving reliability in long-term operation by avoiding damage to components of the refrigerator caused by an environmental temperature.

A hydrogen cooling apparatus according to the present invention is a hydrogen cooling apparatus comprising:
a refrigerator including: a refrigeration circuit in which a compressor, a condenser, an expansion valve, and an evaporator are connected in such a manner that a refrigerant is circulated therethrough in this order; and a bypass circuit including: a bypass flow path that extends from a part, which is downstream of the compressor and upstream of the condenser in the refrigeration circuit, to a part, which is downstream of the expansion valve and upstream of the evaporator in the refrigeration circuit; and an opening and closing valve provided on the bypass flow path; and
a fluid circulation unit including a circulation path connected to the evaporator to allow a hydrogen cooling fluid cooled by the refrigerant in the evaporator and flowing out from the evaporator to circulate through the evaporator via a heat exchanger in which the hydrogen cooling fluid and hydrogen exchange heat;
wherein:
   when a pressure of the refrigerant at a first pressure detection position downstream of the compressor and upstream of the condenser in the refrigeration circuit, the first pressure detection position being set downstream of a connection position of the bypass flow path, exceeds a first predetermined value, the refrigerator opens the opening and closing valve; and
   when a pressure of the refrigerant at the first pressure detection position falls below a second predetermined value less than the first predetermined value, the refrigerator closes the opening and closing valve.

In this structure, the refrigerant flowing out from the compressor can be bypassed to the downstream side of the condenser based on the first predetermined value that is defined as a pressure of the refrigerant at which the condenser is considered to be adversely affected for example, in a case where, when an environment of the hydrogen cooling apparatus has an extremely high temperature, a condensation pressure of the refrigerant condensed by the condenser increases so that a pressure of the refrigerant flowing out from the compressor may be increased to adversely affect the condenser. This can avoid an adverse effect caused by the refrigerant including an excessively high pressure which flows into the condenser. Thus, it is possible to avoid damage to the components of the refrigerator caused by the environmental temperature, while improving reliability of long-term operation.

When a pressure of the refrigerant at a second pressure detection position downstream of the evaporator and upstream of the compressor in the refrigeration circuit falls below a third predetermined value, the refrigerator may open the opening and closing valve. When a pressure of the refrigerant at the second pressure detection position exceeds a fourth predetermined value more than the third predetermined value, the refrigerator may close the opening and closing valve.

In this structure, the refrigerant flowing out from the compressor can be bypassed to the downstream side of the expansion valve based on the third predetermined value that is defined as a pressure of the refrigerant at which the compressor is considered to be adversely affected, for example, in a case where, when an environment of the hydrogen cooling apparatus includes an extremely low temperature, the condensation pressure of the refrigerant condensed by the condenser decreases so that an evaporation pressure of the refrigerant in the evaporator may be decreased to adversely affect the compressor. This can avoid an adverse effect caused by the refrigerant including an excessively low pressure, by increasing the evaporation pressure of the refrigerant. It is possible to avoid damage to the components of the refrigerator caused by the environmental temperature, while improving reliability of long-term operation.

The bypass circuit may further include: a normal flow path that connects a part upstream of the opening and closing valve and a part downstream thereof in the bypass flow path; and a flowrate regulation valve provided on the normal flow path. When the opening and closing valve is in a closed state, the refrigerator may regulate an opening degree of the flowrate regulation valve in such a manner that a pressure of the refrigerant at the second pressure detection position is maintained at a predetermine target value. When the opening and closing valve is in an open state, the refrigerator may close the flowrate regulation valve.

In this structure, when an environment of the hydrogen cooling apparatus has a normal temperature, a pressure of the refrigerant returning to the compressor can be stably maintained in a desired state, stable cooling can be obtained.

The fluid circulation unit may further include a thermal storage tank that adiabatically stores the hydrogen cooling fluid.

In this structure, when an environment of the hydrogen cooling apparatus has an extremely high temperature or an extremely low temperature so that the refrigeration capacity of the refrigerator decreases, the hydrogen cooling fluid stored in the thermal storage tank suppresses sudden decrease in refrigeration capacity of the heat exchanger. Thus, a state in which hydrogen can be properly cooled can be maintained for a certain period of time. Particularly when the opening and closing valve is opened, a refrigeration capacity of the evaporator decreases, but the decrease in refrigeration capacity of the fluid circulation unit in such a situation can be effectively suppressed. In addition, sudden expansion of the hydrogen cooling fluid can be suppressed, and a time required for returning to normal operation after the opening and closing valve is closed can be reduced.

A hydrogen cooling apparatus according to the present invention is a hydrogen cooling apparatus comprising:
a high-temperature-side refrigerator including: a high-temperature-side refrigeration circuit in which a high-temperature-side compressor, a high-temperature-side condenser, a high-temperature-side expansion valve, and a high-temperature-side evaporator are connected in such a manner that a high-temperature-side refrigerant is circulated therethrough in this order; and a high-temperature-side bypass circuit including: a high-temperature-side bypass flow path that extends from a part, which is downstream of the high-temperature-side compressor and upstream of the high-temperature-side condenser in the high-temperature-side refrigeration circuit, to a part, which is downstream of the high-temperature-side expansion valve and upstream of the high-temperature-side evaporator in the high-temperature-side refrigeration circuit; and a high-temperature-side opening and closing valve provided on the high-temperature-side bypass flow path;
a low-temperature-side refrigerator including: a low-temperature-side refrigeration circuit in which a low-temperature-side compressor, a low-temperature-side condenser, a low-temperature-side expansion valve, and a low-temperature-side evaporator are connected in such a manner that a low-temperature-side refrigerant is circulated therethrough in this order; and a low-temperature-side bypass circuit including: a low-temperature-side bypass flow path that extends from a part, which is downstream of the low-temperature-side compressor and upstream of the low-temperature-side condenser in the low-temperature-side refrigeration circuit, to a part, which is downstream of the low-temperature-side expansion valve and upstream of the low-temperature-side evaporator in the low-temperature-side refrigeration circuit; and a low-temperature-side opening and closing valve provided on the low-temperature-side bypass flow path; and
a fluid circulation unit including a circulation path connected to the low-temperature-side evaporator to allow a hydrogen cooling fluid cooled by the low-temperature-side refrigerant in the low-temperature-side evaporator and flowing out from the low-temperature-side evaporator to circulate through the low-temperature-side evaporator via a heat exchanger in which the hydrogen cooling fluid and hydrogen exchange heat;
wherein:
   the high-temperature-side evaporator of the high-temperature-side refrigeration circuit and the low-temperature-side condenser of the low-temperature-side refrigeration circuit constitute a cascade condenser;
   when a pressure of the high-temperature-side refrigerant at a pressure detection position downstream of the high-temperature-side compressor and upstream of the high-temperature-side condenser in the high-temperature-side refrigeration circuit, the pressure detection position being set downstream of a connection position of the high-temperature-side bypass flow path, exceeds a high-temperature-side first predetermined value, the high-temperature-side refrigerator opens the high-temperature-side opening and closing valve; and
   when a pressure of the high-temperature-side refrigerant at the high-temperature-side first pressure detection position falls below a high-temperature-side second predetermined value less than the high-temperature-side first predetermined value, the high-temperature-side refrigerator closes the high-temperature-side opening and closing valve.

In this structure, the use of binary refrigeration easily secures a desired refrigeration capacity even in an extremely high temperature environment, and reduces a time required to reach the desired refrigeration capacity compared to a mono type. In addition, in a case where, when an environment of the hydrogen cooling apparatus has an extremely high temperature, a condensation pressure of the high-temperature-side refrigerant condensed by the high-temperature-side condenser increases so that a pressure of the high-temperature-side refrigerant flowing out from the high-temperature-side compressor may be increased to adversely affect the high-temperature-side condenser, the high-temperature-side refrigerant flowing out from the high-temperature-side compressor can be bypassed to the downstream side of the high-temperature-side condenser based on the high-temperature-side first predetermined value that is defined as a pressure of the high-temperature-side refrigerant at which the high-temperature-side condenser is considered to be adversely affected. This can avoid an adverse effect caused by the high-temperature-side refrigerant including a excessively high pressure which flows into the high-temperature-side condenser. Thus, it is possible to avoid damage to the components of the refrigerator caused by the environmental temperature, while improving reliability of long-term operation.

When a pressure of the low-temperature-side refrigerant at a pressure detection position downstream of the low-temperature-side compressor and upstream of the low-temperature-side condenser in the low-temperature-side refrigeration circuit, the pressure detection position being set downstream of a connection position of the low-temperature-side bypass flow path, exceeds a low-temperature-side first predetermined value, the low-temperature-side refrigerator may open the low-temperature-side opening and closing valve. When a pressure of the low-temperature-side refrigerant at the low-temperature-side first pressure detection position falls below a low-temperature-side second predetermined value less than the low-temperature-side first predetermined value, the low-temperature-side refrigerator may close the low-temperature-side opening and closing valve.

In this structure, for example, in a case where, when an environment of the hydrogen cooling apparatus has an extremely low temperature, the condensation pressure of the low-temperature-side refrigerant condensed by the low-temperature-side condenser decreases so that the evaporation pressure of the low-temperature-side refrigerant in the low-temperature-side evaporator may be decreased to adversely affect the low-temperature-side compressor, the low-temperature-side refrigerant flowing out from the low-temperature-side compressor can be bypassed to the downstream side of the low-temperature-side expansion valve based on the low-temperature-side first predetermined value that is defined as a pressure of the low-temperature-side refrigerant at which the low-temperature-side compressor is considered to be adversely affected. This can avoid an adverse effect caused by the low-temperature-side refrigerant including an excessively high pressure which flows into the low-temperature-side condenser. It is possible to avoid damage to the components of the refrigerator caused by the environmental temperature, and it is possible to improve reliability of long-term operation.

In addition, a hydrogen supply system according to the present invention is a hydrogen supply system comprising:
the aforementioned hydrogen cooling apparatus;
a hydrogen storage device in which hydrogen is stored; and
a hydrogen flow path through which the hydrogen stored in the hydrogen storage device flows;
wherein the hydrogen flowing through the hydrogen flow path is cooled by the hydrogen cooling apparatus.

The hydrogen supply system can stably cool hydrogen.

In addition, a refrigerator according to the present invention is a refrigerator comprising:
a refrigeration circuit in which a compressor, a condenser, an expansion valve, and an evaporator are connected in such a manner that a refrigerant is circulated therethrough in this order; and
a bypass circuit including: a bypass flow path that extends from a part, which is downstream of the compressor and upstream of the condenser in the refrigeration circuit, to a part, which is downstream of the expansion valve and upstream of the evaporator in the refrigeration circuit; and an opening and closing valve provided on the bypass flow path;
wherein
when a pressure of the refrigerant at a pressure detection position downstream of the compressor and upstream of the condenser in the refrigeration circuit, the pressure detection position being set downstream of a connection position of the bypass flow path, exceeds a first predetermined value, the refrigerator opens the opening and closing valve; and
when a pressure of the refrigerant at the pressure detection position falls below a second predetermined value less than the first predetermined value, the refrigerator closes the opening and closing valve.

This refrigerator can avoid damage to the components of the refrigerator caused by the environmental temperature, and it is possible to improve reliability of long-term operation.

According to the present invention, it is possible to avoid damage to the components of the refrigerator caused by the environmental temperature, and it is possible to improve reliability of long-term operation.

### Brief Description of The Drawings

Fig. 1 is a view showing a schematic structure of a hydrogen supply system according to one embodiment of the present invention.
Fig. 2 is a flowchart for describing an operation of a high-temperature-side refrigerator forming the hydrogen supply system shown in Fig. 1.
Fig. 3 is a flowchart for describing an operation of a low-temperature-side refrigerator forming the hydrogen supply system shown in Fig. 1.

### Mode for Carrying out the Invention

One embodiment of the present invention is described herebelow.

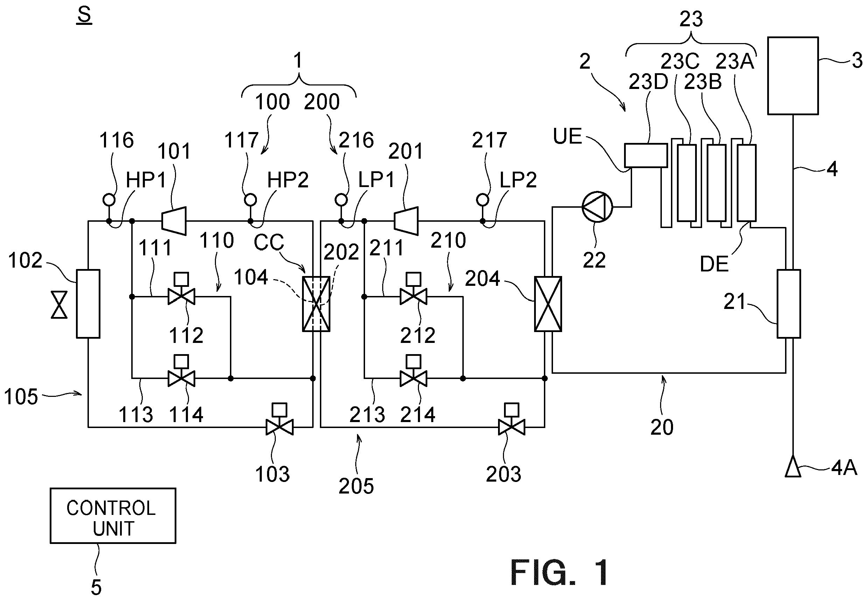

Fig. 1 is a view showing a schematic structure of a hydrogen supply system S according to one embodiment of the present invention. The hydrogen supply system S according to the embodiment comprises a binary refrigeration unit 1, a hydrogen-cooling-fluid circulation unit 2, a hydrogen storage device 3, a hydrogen flow path 4, and a control unit 5. The binary refrigeration unit 1, the hydrogen-cooling-fluid circulation unit 2, and the control unit 5 constitute a hydrogen cooling apparatus of the present invention. The hydrogen storage device 3 stores hydrogen. The hydrogen flow path 4 allows hydrogen from the hydrogen storage device 3 to flow outside, when the hydrogen is supplied to the outside. The hydrogen supply system S cools the hydrogen cooling fluid circulated by the hydrogen-cooling-fluid circulation unit 2 by means of the binary refrigeration unit 1, and cools the hydrogen flow path 4 by the cooled hydrogen cooing fluid so as to cool the hydrogen in the hydrogen flow path 4. Respective structures of the hydrogen supply system S are described herebelow.

### <Binary Refrigeration Unit>

The binary refrigeration unit 1 comprises a high-temperature-side refrigerator 100 and a low-temperature-side refrigerator 200. The high-temperature-side refrigerator 100 and the low-temperature-side refrigerator 200 are connected to each other such that the high-temperature-side refrigerator 100 and the low-temperature-side refrigerator 200 constitute a cascade condenser CC. In the cascade condenser CC, a high-temperature-side refrigerant circulated by the high-temperature-side refrigerator 100 and a low-temperature-side refrigerant circulated by the low-temperature-side refrigerator 200 exchange heat, so that the low-temperature-side refrigerant is condensed. R410A, for example, may be used as the high-temperature-side refrigerant, and R23, for example, may be used as the low-temperature-side refrigerant. However, the combination of these refrigerants is not particularly limited.

### (High-temperature-side Refrigerator)

The high-temperature-side refrigerator 100 includes: a high-temperature-side refrigeration circuit 105 in which a high-temperature-side compressor 101, a high-temperature-side condenser 102, a high-temperature-side expansion valve 103, and a high-temperature-side evaporator 104 are connected by pipes in such a manner that the high-temperature-side refrigerant is circulated therethrough in this order; and a high-temperature-side bypass circuit 110. As will be described in detail below, the high-temperature-side bypass circuit 110 is provided to allow the refrigerant including a high temperature and a high pressure and flowing out from the high-temperature-side compressor 101 to flow into a part between the high-temperature-side expansion valve 103 and the high-temperature-side evaporator 104.

In the high-temperature-side refrigeration circuit 105, the high-temperature-side refrigerant compressed by the high-temperature-side compressor 101 flows into the high-temperature-side condenser 102, and the refrigerant including flown into the high-temperature-side condenser 102 is condensed by air cooling or liquid cooling (air cooling in this example). Thereafter, the high-temperature-side refrigerant is depressurized by the high-temperature-side expansion valve 103 to become in a gas-liquid mixed state, with low-temperature which then flows into the high-temperature-side evaporator 104. The high-temperature-side evaporator 104 constitutes the aforementioned cascade condenser CC in which the high-temperature-side refrigerant exchanges heat with the low-temperature-side refrigerant circulated by the low-temperature-side refrigerator 200. After that, the high-temperature-side refrigerant flows into the high-temperature-side compressor 101, and is then compressed again by the high-temperature-side compressor 101.

The high-temperature-side bypass circuit 110 includes: a high-temperature-side bypass flow path 111 that extends from a part, which is downstream of the high-temperature-side compressor 101 and upstream of the high-temperature-side condenser 102 in the high-temperature-side refrigeration circuit 105, to a part, which is downstream of the high-temperature-side expansion valve 103 and upstream of the high-temperature-side evaporator 104 in the high-temperature-side refrigeration circuit 105; and a high-temperature-side opening and closing valve 112 provided on the high-temperature-side bypass flow path 111. The high-temperature-side bypass circuit 110 in this embodiment further includes: a high-temperature-side normal flow path 113 that connects a part upstream of the high-temperature-side opening and closing valve 112 and a part downstream thereof in the high-temperature-side bypass flow path 111; and a high-temperature-side flowrate regulation valve 114 provided on the high-temperature-side normal flow path 113.

The high-temperature-side opening and closing valve 112 is configured to switch between two positions of an open state and a closed state, and may comprise a solenoid valve, for example. The high-temperature-side flowrate regulation valve 114 is configured such that its opening degree can be regulated, and may comprise a motor valve, for example. The high-temperature-side opening and closing valve 112 and the high-temperature-side flowrate regulation valve 114 are electrically connected to the control unit 5 so that their operations are controlled by the control unit 5.

The high-temperature-side opening and closing valve 112 is provided to allow a large amount of high-temperature-side refrigerant to flow into a part downstream of the high-temperature-side expansion valve 103, when the high-temperature-side refrigerant has an abnormal pressure. The high-temperature-side flowrate regulation valve 114 is provided to maintain a constant pressure of the high-temperature-side refrigerant returning to the high-temperature-side compressor 101 during normal operation.

A reference numeral 116 in Fig. 1 shows a high-temperature-side first pressure sensor that detects a pressure of the high-temperature-side refrigerant at a high-temperature-side first pressure detection position HP1 downstream of the high-temperature-side compressor 101 and upstream of the high-temperature-side condenser 102 in the high-temperature-side refrigeration circuit 105, the high-temperature-side first pressure detection position HP1 being set downstream of a connection position of the high-temperature-side bypass flow path 111. A reference numeral 117 shows a high-temperature-side second pressure sensor that detects a pressure of the high-temperature-side refrigerant at a high-temperature-side second pressure detection position HP2 downstream of the high-temperature-side evaporator 104 and upstream of the high-temperature-side compressor 101 in the high-temperature-side refrigeration circuit 105.

The high-temperature-side first pressure sensor 116 and the high-temperature-side second pressure sensor 117 are electrically connected to the control unit 5, and are configured to transmit information detected by them to the control unit 5. The control unit 5 controls operations of the high-temperature-side opening and closing valve 112 and the high-temperature-side flowrate regulation valve 114 based on the information from the high-temperature-side first pressure sensor 116 and the high-temperature-side second pressure sensor 117.

### (Low-temperature-side Refrigerator)

The low-temperature-side refrigerator 200 includes: a low-temperature-side refrigeration circuit 205 in which a low-temperature-side compressor 201, a low-temperature-side condenser 202, a low-temperature-side expansion valve 203, and a low-temperature-side evaporator 204 are connected by pipes in such a manner that the low-temperature-side refrigerant is circulated therethrough in this order; and a low-temperature-side bypass circuit 210. The low-temperature-side bypass circuit 210 is provided to allow the refrigerant having a high temperature and a high pressure and flowing out from the low-temperature-side compressor 201 to flow into a part between the low-temperature-side expansion valve 203 and the low-temperature-side evaporator 204.

In the low-temperature-side refrigeration circuit 205, the low-temperature-side refrigerant compressed by the low-temperature-side compressor 201 flows into the low-temperature-side condenser 202. The low-temperature-side condenser 202 constitutes the aforementioned cascade condenser CC in which the low-temperature-side refrigerant is condensed by the high-temperature-side refrigerant. Thereafter, the low-temperature-side refrigerant is depressurized by the the low-temperature-side expansion valve 203 to become in a gas-liquid mixed state with low-temperature, which then flows into the low-temperature-side evaporator 204. The low-temperature-side refrigerant including flown into the low-temperature-side evaporator 204 exchanges heat with the hydrogen cooling fluid circulated by the hydrogen-cooling-fluid circulation unit 2 so as to cool the hydrogen cooling fluid. After that, the low-temperature-side refrigerant flows into the low-temperature-side compressor 201, and is then compressed again by the low-temperature-side compressor 201.

The low-temperature-side bypass circuit 210 includes: a low-temperature-side bypass flow path 211 that extends from a part, which is downstream of the low-temperature-side compressor 201 and upstream of the low-temperature-side condenser 202 in the low-temperature-side refrigeration circuit 205, to a part, which is downstream of the low-temperature-side expansion valve 203 and upstream of the low-temperature-side evaporator 204 in the low-temperature-side refrigeration circuit 205; and a low-temperature-side opening and closing valve 212 provided on the low-temperature-side bypass flow path 211. The low-temperature-side bypass circuit 210 in this embodiment further includes: a low-temperature-side normal flow path 213 that connects a part upstream of the low-temperature-side opening and closing valve 212 and a part downstream thereof in the low-temperature-side bypass flow path 211; and a low-temperature-side flowrate regulation valve 214 provided on the low-temperature-side normal flow path 213.

Similarly to the aforementioned high-temperature-side opening and closing valve 112, the low-temperature-side opening and closing valve 212 is configured to switch between two positions of an open state and a closed state, and may comprise a solenoid valve, for example. The low-temperature-side flowrate regulation valve 214 is configured such that its opening degree can be regulated, and may comprise a motor valve, for example. The low-temperature-side opening and closing valve 212 and the low-temperature-side flowrate regulation valve 214 are electrically connected to the control unit 5 so that their operations are controlled by the control unit 5.

Also in the low-temperature-side refrigerator 200, the low-temperature-side opening and closing valve 212 is provided to allow a large amount of low-temperature-side refrigerant to flow into a part downstream of the low-temperature-side expansion valve 203, when the low-temperature-side refrigerant has an abnormal pressure. The low-temperature-side flowrate regulation valve 214 is provided to maintain a constant pressure of the low-temperature-side refrigerant returning to the low-temperature-side compressor 201 during normal operation.

A reference numeral 216 in Fig. 1 shows a low-temperature-side first pressure sensor that detects a pressure of the low-temperature-side refrigerant at a low-temperature-side first pressure detection position LP1 downstream of the low-temperature-side compressor 201 and upstream of the low-temperature-side bypass flow path 211 in the low-temperature-side refrigeration circuit 205, the low-temperature-side first pressure detection position LP1 being set downstream of a connection position of the low-temperature-side bypass flow path 211. A reference numeral 217 shows a low-temperature-side second pressure sensor that detects a pressure of the low-temperature-side refrigerant at a low-temperature-side second pressure detection position LP2 downstream of the low-temperature-side evaporator 204 and upstream of the low-temperature-side compressor 201 in the low-temperature-side refrigeration circuit 205.

The low-temperature-side first pressure sensor 216 and the low-temperature-side second pressure sensor 217 are electrically connected to the control unit 5, and are configured to transmit information detected by them to the control unit 5. The control unit 5 controls operations of the low-temperature-side opening and closing valve 212 and the low-temperature-side flowrate regulation valve 214 based on the information from the low-temperature-side first pressure sensor 216 and the low-temperature-side second pressure sensor 217.

### <Hydrogen-cooling-fluid circulation unit>

The hydrogen-cooling-fluid circulation unit 2 includes a circulation path 20 connected to the low-temperature-side evaporator 204 to allow the hydrogen cooling fluid cooled by the low-temperature-side refrigerant in the low-temperature-side evaporator 204 and flowing out from the low-temperature-side evaporator 204 to circulate through the low-temperature-side evaporator 204 via a heat exchanger 21. The heat exchanger 21 cools the hydrogen by exchanging heat between the hydrogen cooling fluid and the hydrogen. An antifreeze solution (brine) is used as the hydrogen cooling fluid, but it is not particularly limited.

The hydrogen-cooling-fluid circulation unit 2 in this embodiment further includes, on the circulation path 20, a liquid feed pump 22 for circulating the hydrogen cooling fluid, and a tank unit 23 for storing the surplus hydrogen cooling fluid. The tank unit 23 includes a plurality of thermal storage tanks 23A to 23C (first thermal storage tank 23A, second thermal storage tank 23B, third thermal storage tank 23C) and a replenishment tank 23D.

The first thermal storage tank 23A, the second thermal storage tank 23B, and the third thermal storage tank 23C are each covered with a heat insulation member, for example, to adiabatically store the hydrogen cooing fluid. The first thermal storage tank 23A, the second thermal storage tank 23B, and the third thermal storage tank 23C are connected in series by pipes. When the hydrogen cooling fluid circulates, the hydrogen cooling fluid flows through the first thermal storage tank 23A, the second thermal storage tank 23B, and the third thermal storage tank 23C, in this order.

The first thermal storage tank 23A, the second thermal storage tank 23B, and the third thermal storage tank 23C are provided for preventing hydrogen refrigeration capacity of the heat exchanger 21 from suddenly decreasing, when a refrigeration capacity of the binary refrigeration unit 1 abnormally decreases. A volume V1 of the total hydrogen cooling fluid stored in the first thermal storage tank 23A, the second thermal storage tank 23B, and the third thermal storage tank 23C should be 20 times or more, in particular, 26 to 30 times, a volume V2 of a flow path part in the circulation path 20 excluding the tank unit 23 (part from point UE to point DE counterclockwise). On the other hand, the replenishment tank 23D is configured to be openable and closable, and stores the hydrogen cooling fluid such that it can be replenished or discharged.

### <Hydrogen Storage device and Hydrogen Flow Path>

The hydrogen storage device 3 stores compressed hydrogen, for example, and the hydrogen flow path 4 allows the hydrogen from the hydrogen storage device 3 to flow to the outside, when the hydrogen is supplied to the outside, such as a fuel cell or a fuel cell vehicle. A supply nozzle 4A is provided at an end of the hydrogen flow path 4, opposite to the hydrogen storage device 3 side. The supply nozzle 4A allows the hydrogen to flow to the outside. The hydrogen flow path 4 is connected to the heat exchanger 21 of the hydrogen-cooling-fluid circulation unit 2. The heat exchanger 21 cools the hydrogen in the hydrogen flow path 4 by cooling the hydrogen flow path 4 by means of the hydrogen cooling fluid cooled by the low-temperature-side refrigerant.

### <Control Unit>

As described above, the control unit 5 controls operations of the high-temperature-side opening and closing valve 112, the high-temperature-side flowrate regulation valve 114, the low-temperature-side opening and closing valve 212 and the low-temperature-side flowrate regulation valve 214. The control unit 5 may comprise a computer provided with a CPU, ROM, RAM, etc. In this case, the control unit 5 may control operations of the respective valves in accordance with a stored program. A process of the control unit 5 is described in detail below.

### (Control in High-temperature-side Refrigerator)

When a pressure of the high-temperature-side refrigerant circulating through the high-temperature-side circuit 105 is determined to be normal, the control unit 5 closes the high-temperature-side opening and closing valve 112, and controls the opening degree of the high-temperature-side flowrate regulation valve 114 based on a value detected by the high-temperature-side second pressure sensor 117. Specifically, the control unit 5 regulates the opening degree of the high-temperature-side flowrate regulation valve 114 in such a manner that a pressure of the high-temperature-side refrigerant detected by the high-temperature-side second pressure sensor 117 at the high-temperature-side second pressure detection position HP2 is maintained at a predetermined target value.

On the other hand, when a pressure of the high-temperature-side refrigerant detected by the high-temperature-side first pressure sensor 116 at the high-temperature-side first pressure detection position HP1 exceeds a high-temperature-side first predetermined value, the control unit 5 determines that the pressure of the high-temperature-side refrigerant is abnormal. In addition, when a pressure of the high-temperature-side refrigerant detected by the high-temperature-side second pressure sensor 117 at the high-temperature-side second pressure detection position HP2 falls below a high-temperature-side third predetermined value, the control unit 5 determines that the pressure of the high-temperature-side refrigerant is abnormal.

Then, when a pressure of the high-temperature-side refrigerant exceeds the high-temperature-side first predetermined value, the control unit 5 opens the high-temperature-side opening and closing valve 112 and closes the high-temperature-side flowrate regulation valve 114. When a pressure of the high-temperature-side refrigerant detected at the high-temperature-side first pressure detection location HP1 falls below a high-temperature-side second predetermined value less than the high-temperature-side first predetermined value after the control unit 5 includes opened the high-temperature-side opening and closing valve 112, the control unit 5 closes the high-temperature-side opening and closing valve 112.

In addition, when a pressure of the high-temperature-side refrigerant falls below the high-temperature-side third predetermined value, the control unit 5 opens the high-temperature-side opening and closing valve 112 and closes the high-temperature-side flowrate regulation valve 114. When a pressure of the high-temperature-side refrigerant detected at the high-temperature-side second pressure detection location HP2 exceeds a high-temperature-side fourth predetermined value more than the high-temperature-side third predetermined value after the control unit 5 includes opened the high-temperature-side opening and closing valve 112, the control unit 5 closes the high-temperature-side opening and closing valve 112.

### (Control in Low-temperature-side Refrigerator)

On the other hand, control in the low-temperature-side refrigerator 200 is as follows. Namely, when a pressure of the low-temperature-side refrigerant circulating through the low-temperature-side circuit 205 is determined to be normal, the control unit 5 closes the low-temperature-side opening and closing valve 212, and controls the opening degree of the low-temperature-side flowrate regulation valve 214 based on a value detected by the low-temperature-side second pressure sensor 217. Specifically, the control unit 5 regulates the opening degree of the low-temperature-side flowrate regulation valve 214 in such a manner that a pressure of the low-temperature-side refrigerant detected by the low-temperature-side second pressure sensor 217 at the low-temperature-side second pressure detection position LP2 is maintained at a predetermined target value.

When a pressure of the low-temperature-side refrigerant detected by the low-temperature-side first pressure sensor 216 at the low-temperature-side first pressure detection position LP1 exceeds a low-temperature-side first predetermined value, the control unit 5 determines that the pressure of the low-temperature-side refrigerant is abnormal. In addition, when a pressure of the low-temperature-side refrigerant detected by the low-temperature-side second pressure sensor 217 at the low-temperature-side second pressure detection position LP2 falls below a low-temperature-side third predetermined value, the control unit 5 determines that the pressure of the low-temperature-side refrigerant is abnormal.

Then, when a pressure of the low-temperature-side refrigerant exceeds the low-temperature-side first predetermined value, the control unit 5 opens the low-temperature-side opening and closing valve 212 and closes the low-temperature-side flowrate regulation valve 214. When a pressure of the low-temperature-side refrigerant detected at the low-temperature-side first pressure detection location LP1 falls below a low-temperature-side second predetermined value less than the low-temperature-side first predetermined value after the control unit 5 includes opened the low-temperature-side opening and closing valve 212, the control unit 5 closes the low-temperature-side opening and closing valve 212.

In addition, when a pressure of the low-temperature-side refrigerant falls below the low-temperature-side third predetermined value, the control unit 5 opens the low-temperature-side opening and closing valve 212 and closes the low-temperature-side flowrate regulation valve 214. When a pressure of the low-temperature-side refrigerant detected at the low-temperature-side second pressure detection location LP2 exceeds a low-temperature-side fourth predetermined value more than the low-temperature-side third predetermined value after the control unit 5 includes opened the low-temperature-side opening and closing valve 212, the control unit 5 closes the low-temperature-side opening and closing valve 212.

### <Operation>

Next, an operation of the hydrogen cooling system S is described. When the hydrogen cooling system S is operated, the high-temperature-side compressor 101, the low-temperature-side compressor 201, and the liquid feed pump 22 are driven first. At this time, in the high-temperature-side refrigerator 100, the high-temperature-side opening and closing valve 112 is closed, while the high-temperature-side flowrate regulation valve 114 is in a state where its opening degree can be regulated. Similarly, in the low-temperature-side refrigerator 200, the low-temperature-side opening and closing valve 212 is closed, while the low-temperature-side flowrate regulation valve 214 is in a state where its opening degree can be regulated. After such starting, the low-temperature-side refrigerant flowing through the low-temperature-side condenser 202 of the low-temperature-side refrigerator 200 is cooled by the high-temperature-side refrigerant flowing through the high-temperature-side evaporator 104 of the high-temperature-side refrigerator 100. Then, the hydrogen cooing fluid circulated by the hydrogen-cooling-fluid circulation unit 2 is cooled by the low-temperature-side refrigerant flowing through the low-temperature-side evaporator 204 of the low-temperature-side refrigerator 200. Then, the hydrogen flow path 4 is cooled by the cooled hydrogen cooling fluid so that the hydrogen in the hydrogen flow path 4 is cooled.

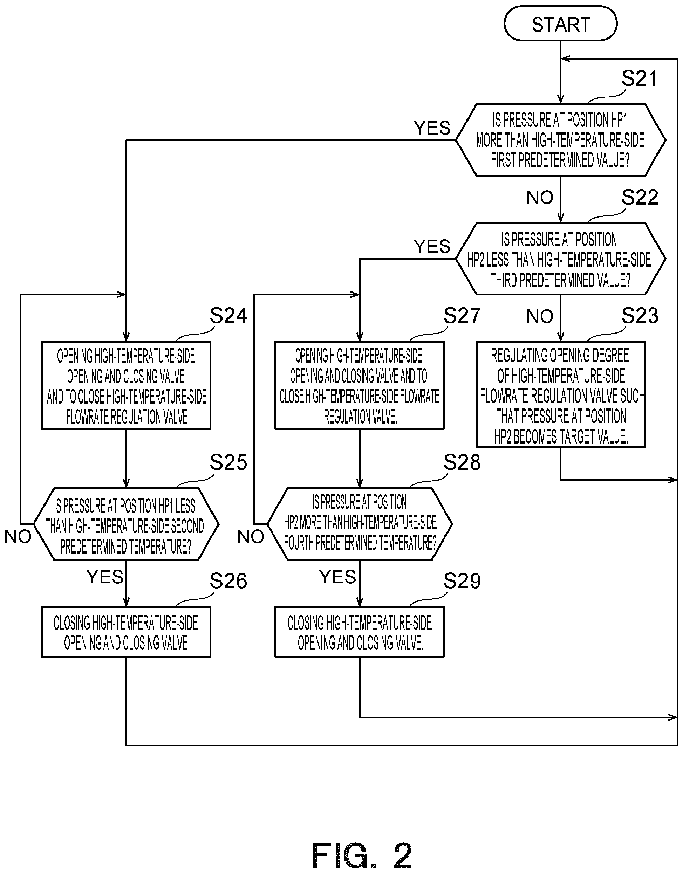

In such an operation, the high-temperature-side refrigerator 100 operates in accordance with a flowchart shown in Fig. 2. The following operations are performed by the control unit 5 that controls the high-temperature-side refrigerator 100.

As shown in Fig. 2, in a step S21, the high-temperature-side refrigerator 100 determines whether a pressure of the high-temperature-side refrigerant detected by the high-temperature-side first pressure sensor 116 at the high-temperature-side first pressure detection position HP1 exceeds the high-temperature-side first predetermined value. When the pressure of the high-temperature-side refrigerant does not exceed the high-temperature-side first predetermined value (when the pressure of the high-temperature-side refrigerant is the high-temperature-side first predetermined value or below), the process shifts to a step S22. On the other hand, when the pressure of the high-temperature-side refrigerant exceeds the high-temperature-side first predetermined value, the process shifts to a step S24.

When the pressure of the high-temperature-side refrigerant does not exceed the high-temperature-side first predetermined value, in the step S22, the control unit 5 determines whether a pressure of the high-temperature-side refrigerant detected by the high-temperature-side second pressure sensor 117 at the high-temperature-side second pressure detection position HP2 falls below the high-temperature-side third predetermined value. When the pressure of the high-temperature-side refrigerant is the high-temperature-side third predetermined temperature or above, the process shifts to a step S23. On the other hand, when the pressure of the high-temperature-side refrigerant falls below the high-temperature-side third predetermined temperature, the process shifts to a step S27.

The step S23 is that the pressure of the high-temperature-side refrigerant is determined to be normal. In this case, the control unit 5 regulates the opening degree of the high-temperature-side flowrate regulation valve 114 in such a manner that a pressure of the high-temperature-side refrigerant detected by the high-temperature-side second pressure sensor 117 at the high-temperature-side second pressure detection position HP2 is maintained at a predetermined target value. Thereafter, the process returns to the step S21.

On the other hand, the step 24 is that the pressure of the high-temperature-side refrigerant is determined to be abnormal. In this case, the control unit 5 opens the high-temperature-side opening and closing valve 112 and closes the high-temperature-side flowrate regulation valve 114. Then, in a step S25, the control unit 5 determines whether a pressure of the high-temperature-side refrigerant detected at the high-temperature-side first pressure detection location HP1 falls below the high-temperature-side second predetermined value less than the high-temperature-side first predetermined value. When the pressure of the high-temperature-side refrigerant falls below the high-temperature-side second predetermined value, the high-temperature-side opening and closing valve 112 is closed in a step S26, and the process returns to the step S21. On the other hand, when the pressure of the high-temperature-side refrigerant does not fall below the high-temperature-side second predetermined value, the high-temperature-side opening and closing valve 112 is maintained open.

The step 27 is that the pressure of the high-temperature-side refrigerant is determined to be abnormal. In this case, the control unit 5 opens the high-temperature-side opening and closing valve 112 and closes the high-temperature-side flowrate regulation valve 114. Then, in a step S28, the control unit 5 determines whether a pressure of the high-temperature-side refrigerant detected at the high-temperature-side second pressure detection location HP2 exceeds the high-temperature-side forth predetermined value more than the high-temperature-side third predetermined value. When the pressure of the high-temperature-side refrigerant exceeds the high-temperature-side fourth predetermined value, the high-temperature-side opening and closing valve 112 is closed in a step S29, and the process returns to the step S21. On the other hand, when the pressure of the high-temperature-side refrigerant does not exceed the high-temperature-side fourth predetermined value, the high-temperature-side opening and closing valve 112 is maintained open.

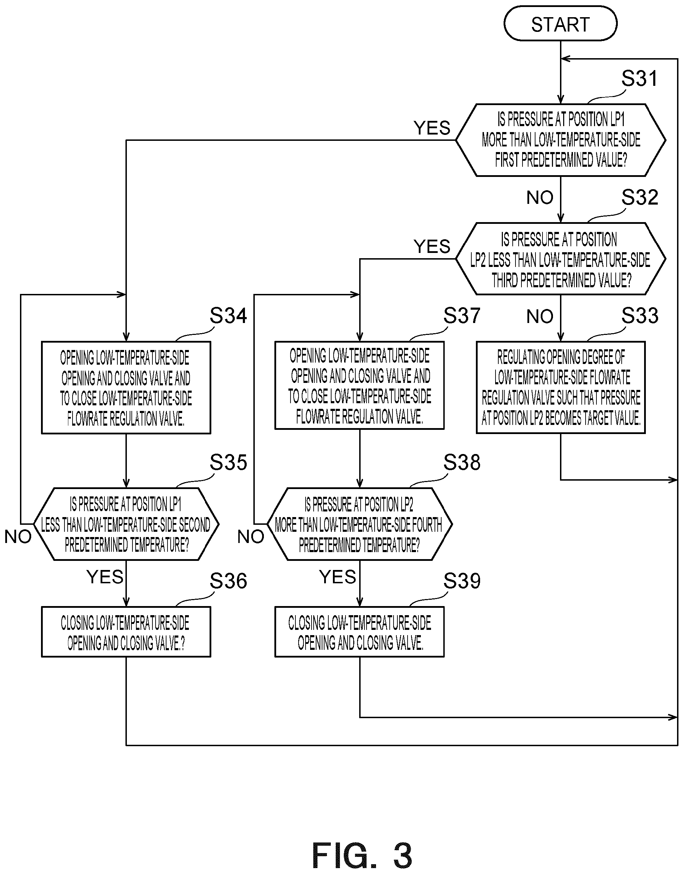

In addition, the low-temperature-side refrigerator 200 operates in accordance with a flowchart shown in Fig. 3. The following operations are performed by the control unit 5 that controls the low-temperature-side refrigerator 200.

As shown in Fig. 3, in a step S31, the low-temperature-side refrigerator 200 determines whether a pressure of the low-temperature-side refrigerant detected by the low-temperature-side first pressure sensor 216 at the low-temperature-side first pressure detection position LP1 exceeds the low-temperature-side first predetermined value. When the pressure of the low-temperature-side refrigerant does not exceed the low-temperature-side first predetermined value (when the pressure of the low-temperature-side refrigerant is the low-temperature-side first predetermined value or below), the process shifts to a step S32. On the other hand, when the pressure of the low-temperature-side refrigerant exceeds the low-temperature-side first predetermined value, the process shifts to a step S34.

The step 23 is that the pressure of the low-temperature-side refrigerant does not exceed the low-temperature-side first predetermined value, in the step S32, the control unit 5 determines whether a pressure of the low-temperature-side refrigerant detected by the low-temperature-side second pressure sensor 217 at the low-temperature-side second pressure detection position LP2 falls below the low-temperature-side third predetermined value. When the pressure of the low-temperature-side refrigerant is the low-temperature-side third predetermined temperature or above, the process shifts to a step S33. On the other hand, when the pressure of the low-temperature-side refrigerant falls below the low-temperature-side third predetermined temperature, the process shifts to a step S37.

The step S33 is that the pressure of the low-temperature-side refrigerant is determined to be normal. In this case, the control unit 5 regulates the opening degree of the low-temperature-side flowrate regulation valve 214 in such a manner that a pressure of the low-temperature-side refrigerant detected by the low-temperature-side second pressure sensor 217 at the low-temperature-side second pressure detection position LP2 is maintained at a predetermined target value. Thereafter, the process returns to the step S31.

On the other hand, the step S34 is that the pressure of the low-temperature-side refrigerant is determined to be abnormal. In this case, the control unit 5 opens the low-temperature-side opening and closing valve 212 and closes the low-temperature-side flowrate regulation valve 214. Then, in a step S35, the control unit 5 determines whether a pressure of the low-temperature-side refrigerant detected at the low-temperature-side first pressure detection location LP1 falls below the low-temperature-side second predetermined value less than the low-temperature-side first predetermined value. When the pressure of the low-temperature-side refrigerant falls below the low-temperature-side second predetermined value, the low-temperature-side opening and closing valve 212 is closed in a step S36, and the process returns to the step S31. On the other hand, when the pressure of the low-temperature-side refrigerant does not fall below the low-temperature-side second predetermined value, the low-temperature-side opening and closing valve 212 is maintained open.

The step S37 is that the pressure of the low-temperature-side refrigerant is determined to be abnormal. In this case, the control unit 5 opens the low-temperature-side opening and closing valve 212 and closes the low-temperature-side flowrate regulation valve 214. Then, in a step S38, the control unit 5 determines whether a pressure of the low-temperature-side refrigerant detected at the low-temperature-side second pressure detection location LP2 exceeds the low-temperature-side forth predetermined value more than the low-temperature-side third predetermined value. When the pressure of the low-temperature-side refrigerant exceeds the low-temperature-side fourth predetermined value, the low-temperature-side opening and closing valve 212 is closed in a step S39, and the process returns to the step S31. On the other hand, when the pressure of the low-temperature-side refrigerant does not exceed the low-temperature-side fourth predetermined value, the low-temperature-side opening and closing valve 212 is maintained open.

In the aforementioned embodiment, for example, in a case where, when an environment of the hydrogen cooling apparatus has an extremely high temperature, a condensation pressure of the high-temperature-side refrigerant condensed by the high-temperature-side condenser 102 increases so that a pressure of the high-temperature-side refrigerant flowing out from the high-temperature-side compressor 101 may be increased to adversely affect the high-temperature-side condenser 102, the high-temperature-side refrigerant flowing out from the high-temperature-side compressor 101 can be bypassed to the downstream side of the high-temperature-side condenser 102 based on the high-temperature-side first predetermined value that is defined as a pressure of the high-temperature-side refrigerant at which the high-temperature-side condenser 102 is considered to be adversely affected. This can avoid an adverse effect caused by high-temperature-side refrigerant including an excessively high pressure which flows into the high-temperature-side condenser 102. In addition, for example, in a case where, when an environment of the hydrogen cooling apparatus includes an extremely low temperature, the condensation pressure of the high-temperature-side refrigerant condensed by the high-temperature-side condenser 102 decreases so that the evaporation pressure of the high-temperature-side refrigerant in the high-temperature-side evaporator 104 may be decreased to adversely affect the high-temperature-side compressor 101, the high-temperature-side refrigerant flowing out from the high-temperature-side compressor 101 can be bypassed to the downstream side of the high-temperature-side expansion valve 103 based on the high-temperature-side third predetermined value that is defined as a pressure of the high-temperature-side refrigerant at which the high-temperature-side compressor 101 is considered to be adversely affected. This can avoid an adverse effect caused by the high-temperature-side refrigerant including an excessively low pressure, by increasing the evaporation pressure of the high-temperature-side refrigerant.

Thus, the embodiment can avoid damage to the components of the refrigerator caused by the environmental temperature, and it is possible to improve reliability of long-term operation. Although the one embodiment has been described above, the present invention is not limited to the aforementioned embodiment, and the aforementioned embodiment can be variously modified.

## Claims

1. A hydrogen cooling apparatus comprising:
a refrigerator including: a refrigeration circuit in which a compressor, a condenser, an expansion valve, and an evaporator are connected in such a manner that a refrigerant is circulated therethrough in this order; and a bypass circuit including: a bypass flow path that extends from a part, which is downstream of the compressor and upstream of the condenser in the refrigeration circuit, to a part, which is downstream of the expansion valve and upstream of the evaporator in the refrigeration circuit; and an opening and closing valve provided on the bypass flow path; and
a fluid circulation unit including a circulation path connected to the evaporator to allow a hydrogen cooling fluid cooled by the refrigerant in the evaporator and flowing out from the evaporator to circulate through the evaporator via a heat exchanger in which the hydrogen cooling fluid and hydrogen exchange heat;
wherein:
when a pressure of the refrigerant at a first pressure detection position downstream of the compressor and upstream of the condenser in the refrigeration circuit, the first pressure detection position being set downstream of a connection position of the bypass flow path, exceeds a first predetermined value, the refrigerator opens the opening and closing valve; and
when a pressure of the refrigerant at the first pressure detection position falls below a second predetermined value less than the first predetermined value, the refrigerator closes the opening and closing valve.

2. The hydrogen cooling apparatus according to claim 1, wherein:
when a pressure of the refrigerant at a second pressure detection position downstream of the evaporator and upstream of the compressor in the refrigeration circuit falls below a third predetermined value, the refrigerator opens the opening and closing valve; and
when a pressure of the refrigerant at the second pressure detection position exceeds a fourth predetermined value more than the third predetermined value, the refrigerator closes the opening and closing valve.

3. The hydrogen cooling apparatus according to claim 1 or 2 wherein:
the bypass circuit further includes: a normal flow path that connects a part upstream of the opening and closing valve and a part downstream thereof in the bypass flow path; and a flowrate regulation valve provided on the normal flow path; and
when the opening and closing valve is in a closed state, the refrigerator regulates an opening degree of the flowrate regulation valve in such a manner that a pressure of the refrigerant at a second pressure detection position downstream of the evaporator and upstream of the compressor in the refrigeration circuit is maintained at a predetermine target value,; and
when the opening and closing valve is in an open state, the refrigerator closes the flowrate regulation valve.

4. The hydrogen cooling apparatus according to any of claims 1 to 3, wherein
the fluid circulation unit further includes a thermal storage tank that adiabatically stores the hydrogen cooling fluid.

5. A hydrogen cooling apparatus comprising:
a high-temperature-side refrigerator including: a high-temperature-side refrigeration circuit in which a high-temperature-side compressor, a high-temperature-side condenser, a high-temperature-side expansion valve, and a high-temperature-side evaporator are connected in such a manner that a high-temperature-side refrigerant is circulated therethrough in this order; and a high-temperature-side bypass circuit including: a high-temperature-side bypass flow path that extends from a part, which is downstream of the high-temperature-side compressor and upstream of the high-temperature-side condenser in the high-temperature-side refrigeration circuit, to a part, which is downstream of the high-temperature-side expansion valve and upstream of the high-temperature-side evaporator in the high-temperature-side refrigeration circuit; and a high-temperature-side opening and closing valve provided on the high-temperature-side bypass flow path;
a low-temperature-side refrigerator including: a low-temperature-side refrigeration circuit in which a low-temperature-side compressor, a low-temperature-side condenser, a low-temperature-side expansion valve, and a low-temperature-side evaporator are connected in such a manner that a low-temperature-side refrigerant is circulated therethrough in this order; and a low-temperature-side bypass circuit including: a low-temperature-side bypass flow path that extends from a part, which is downstream of the low-temperature-side compressor and upstream of the low-temperature-side condenser in the low-temperature-side refrigeration circuit, to a part, which is downstream of the low-temperature-side expansion valve and upstream of the low-temperature-side evaporator in the low-temperature-side refrigeration circuit; and a low-temperature-side opening and closing valve provided on the low-temperature-side bypass flow path; and
a fluid circulation unit including a circulation path connected to the low-temperature-side evaporator to allow a hydrogen cooling fluid cooled by the low-temperature-side refrigerant in the low-temperature-side evaporator and flowing out from the low-temperature-side evaporator to circulate through the low-temperature-side evaporator via a heat exchanger in which the hydrogen cooling fluid and hydrogen exchange heat;
wherein:
the high-temperature-side evaporator of the high-temperature-side refrigeration circuit and the low-temperature-side condenser of the low-temperature-side refrigeration circuit constitute a cascade condenser;
when a pressure of the high-temperature-side refrigerant at a pressure detection position downstream of the high-temperature-side compressor and upstream of the high-temperature-side condenser in the high-temperature-side refrigeration circuit, the pressure detection position being set downstream of a connection position of the high-temperature-side bypass flow path, exceeds a high-temperature-side first predetermined value, the high-temperature-side refrigerator opens the high-temperature-side opening and closing valve; and
when a pressure of the high-temperature-side refrigerant at the high-temperature-side first pressure detection position falls below a high-temperature-side second predetermined value less than the high-temperature-side first predetermined value, the high-temperature-side refrigerator closes the high-temperature-side opening and closing valve.

6. The hydrogen cooling apparatus according to claim 5, wherein:
when a pressure of the low-temperature-side refrigerant at a pressure detection position downstream of the low-temperature-side compressor and upstream of the low-temperature-side condenser in the low-temperature-side refrigeration circuit, the pressure detection position being set downstream of a connection position of the low-temperature-side bypass flow path, exceeds a low-temperature-side first predetermined value, the low-temperature-side refrigerator opens the low-temperature-side opening and closing valve; and
when a pressure of the low-temperature-side refrigerant at the low-temperature-side first pressure detection position falls below a low-temperature-side second predetermined value less than the low-temperature-side first predetermined value, the low-temperature-side refrigerator closes the low-temperature-side opening and closing valve.

7. A hydrogen supply system comprising:
a hydrogen cooling apparatus according to any of claims 1 to 6;
a hydrogen storage device in which hydrogen is stored; and
a hydrogen flow path through which the hydrogen stored in the hydrogen storage device flows;
wherein the hydrogen flowing through the hydrogen flow path is cooled by the hydrogen cooling apparatus.

8. A refrigerator comprising:
a refrigeration circuit in which a compressor, a condenser, an expansion valve, and an evaporator are connected in such a manner that a refrigerant is circulated therethrough in this order; and
a bypass circuit including: a bypass flow path that extends from a part, which is downstream of the compressor and upstream of the condenser in the refrigeration circuit, to a part, which is downstream of the expansion valve and upstream of the evaporator in the refrigeration circuit; and an opening and closing valve provided on the bypass flow path;
wherein:
when a pressure of the refrigerant at a pressure detection position downstream of the compressor and upstream of the condenser in the refrigeration circuit, the pressure detection position being set downstream of a connection position of the bypass flow path, exceeds a first predetermined value, the refrigerator opens the opening and closing valve; and
when a pressure of the refrigerant at the pressure detection position falls below a second predetermined value less than the first predetermined value, the refrigerator closes the opening and closing valve.
